# EUROPEAN PATENT APPLICATION

(11) **EP 2 181 837 A1**
(43) Date of publication of application: **05.05.2010**
(21) Application number: 09008343.7
(22) Date of filing: 25.06.2009
(51) Int. Cl.: B29D 30/06, B29C 33/02, B29C 35/02

(54) **Hydraulic press known as "tyre vulcanizing press MGT NX 4500", able to fully accomplish the vulcanizing process for the large tyres used by quarry or earth-moving machinery also called "OTR" tyres**

(30) Priority: 30.06.2008 IT TN20080004 U
(71) Applicant: MGT S.r.l., 38068 Rovereto (TN) (IT)
(72) Inventor: Manfredi, Fabrizio, 38068 Rovereto (TN) (IT)

(57) **Abstract**

THE HYDRAULIC PRESS CALLED "TYRE VULCANIZING PRESS MGT NX 4500" IS DESIGNED TO FULLY ACCOMPLISH THE VULCANIZING PROCESS FOR THE LARGE TYRES USED BY QUARRY OR EARTH-MOVING MACHINERY (KNOWN AS "OTR" TYRES).

THE CURRENTLY MANUFACTURED SYSTEMS ARE ABLE TO PROCESS TYRES MEASURING UP TO 49 INCHES, WHILE THIS MACHINE CAN VULCANIZE TYRES MEASURING UP TO 63 INCHES (AND WITH A TOTAL DIAMETER OF UP TO AND OVER 4.5 METERS). THE UPPER PART OF THE CONNECTING RODS IN THE DEVICE CREATED BY MGT HAS TWO ULTRA-HIGH PRESSURE HYDRAULIC CYLINDERS THAT ALLOW THE DEVICE ITSELF TO EXERCISE A CLOSING FORCE OF OVER 850 TONS. ANOTHER PECULIAR FEATURE OF THE MACHINE IS THE SPECIAL DEVICE SITUATED IN THE LOWER PART OF THE DIE, WHICH ALLOWS THE HYDRAULIC CYLINDER TO BE RELEASED WITHOUT HAVING TO MOVE THE CYLINDER ITSELF.

## Description

This document contains a technical-functional description of a system formed by a hydraulic cylinder able to fully accomplish the vulcanizing process for the large tyres use on mechanical quarry or earth-moving machinery, also known as "OTR tyres.

The technical solution described in this document was designed and built for use by enterprises whose sphere of business is "OTR" tyre retreading or "OTR" tyre reconstruction "as new" by means of a vulcanizing process carried out in two phases.

For this reason, extensive in-depth research was previously conducted in both the Trentino area and outside the province of Trent, so as to assess the real requirements of the industries in the sector. The conclusion was that the demand for large-size tyres is considerably increasing throughout the world. Moreover, since the raw materials are becoming scarce and considering the energy costs, there has been a parallel increase in the demand for reconstructed tyres obtained by processing discarded "carcasses".

### The situation

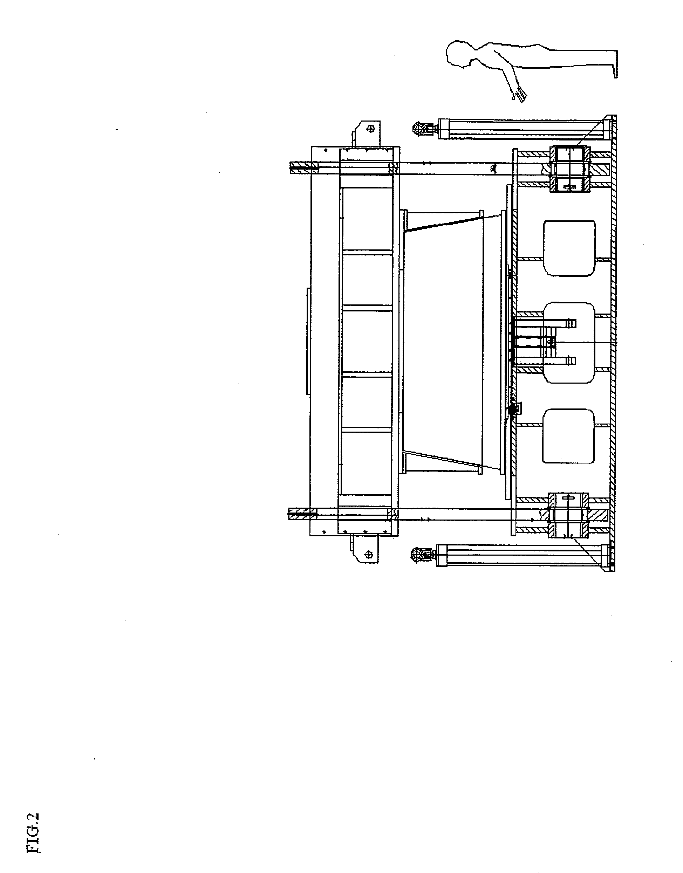

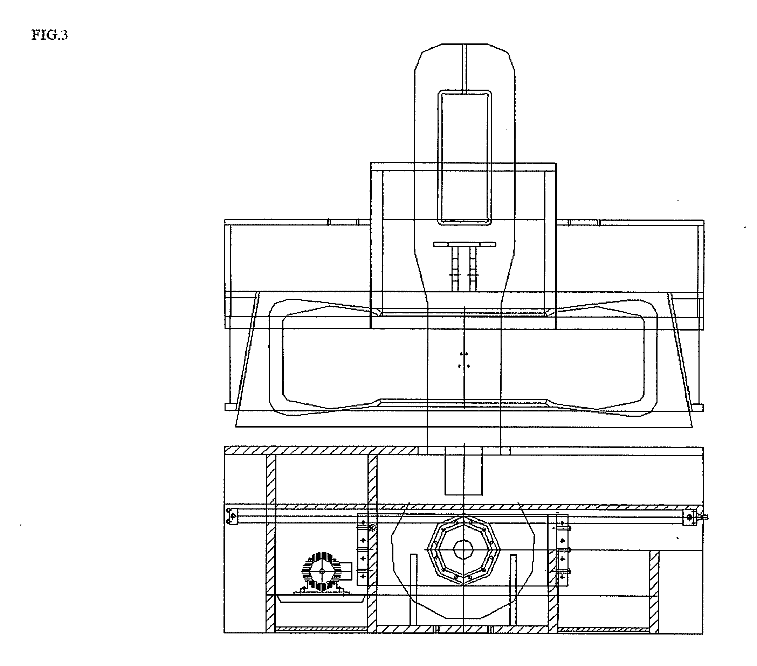

By analysing the demands from the market, MGT Srl discovered that there was an objective limit to the size of the vulcanizing presses used for tyre reconstruction, which are available for up to the 49-inch tyre size (international size 27.00R49). The majority of the devices examined feature a structure with "fixed vertical connecting rods" and an "upper table that can only move in the vertical direction" (see Fig. 2 and 3).

This limitation creates considerable problems when large tyres must be processed, since it is extremely difficult to extract the die table at the end of the process.

The majority of manufacturers of industrial tyre reconstruction systems (on a world-wide scale) are situated in Italy, particularly in the central-north, and are specifically concentrated in the Vallagarina area (southern Trentino area), where a specialized industrial district dedicated to this type of technology began to be established from the '60's.

Having worked for years in the field of mechanical technology, MGT Srl thought it would be interesting to develop a new device, as an addition to its production range, one that was able to overcome the aforementioned difficulties. The idea was to create an advanced system able to handle tyres measuring up to 63 inches without operating limitations (from international size 33.00 R51, through to the xx.00 R63 size currently considered to be the maximum size available on the world market).

The market research conducted by MGT highlighted the fact that the technologies used to date by the principal manufacturers of machinery of this type have physical limitations that substantially prevent use of the type of press such as the one with "fixed connecting rods" shown in the diagrams in Fig. 2 and 3 from being extended, meaning that the largest tyre size they can handle is 49 inches.

The technological limits to resolve largely depend on the need for enormous forces for closing the press, i.e. over 500 tons (about 80-100 tons per sq m).

Another limiting factor for such large tyres is certainly that these sort of machines feature the already mentioned lower piston for extracting the die at the end of the process. This is extremely unwieldy and creates considerable difficulties when the die must be extracted.

The system covered by MGT's research and presented in this document fully overcomes both of the aforementioned limitations and allows the press with "fixed connecting rods" to be used for reconstructing large tyres.

### The solution

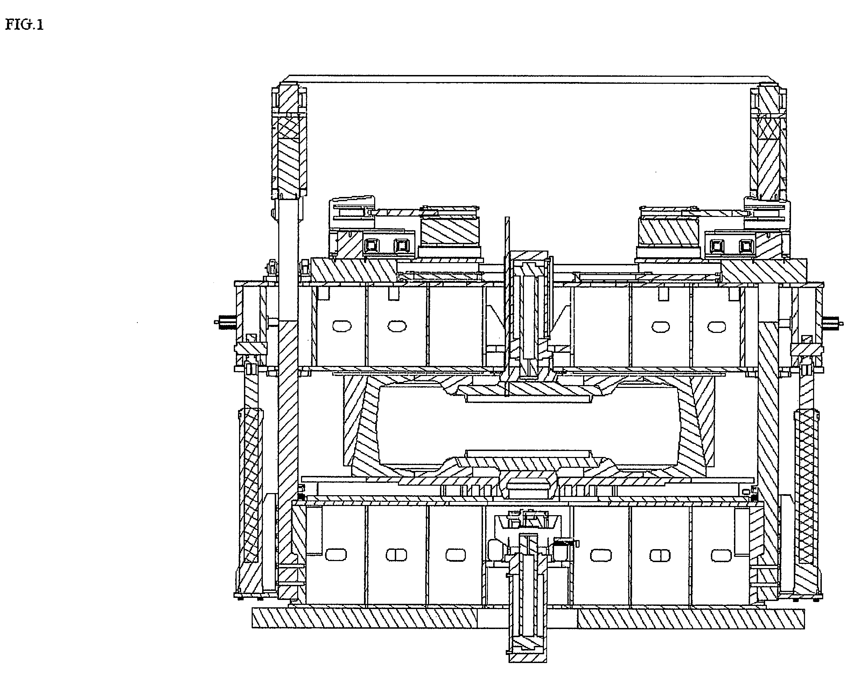

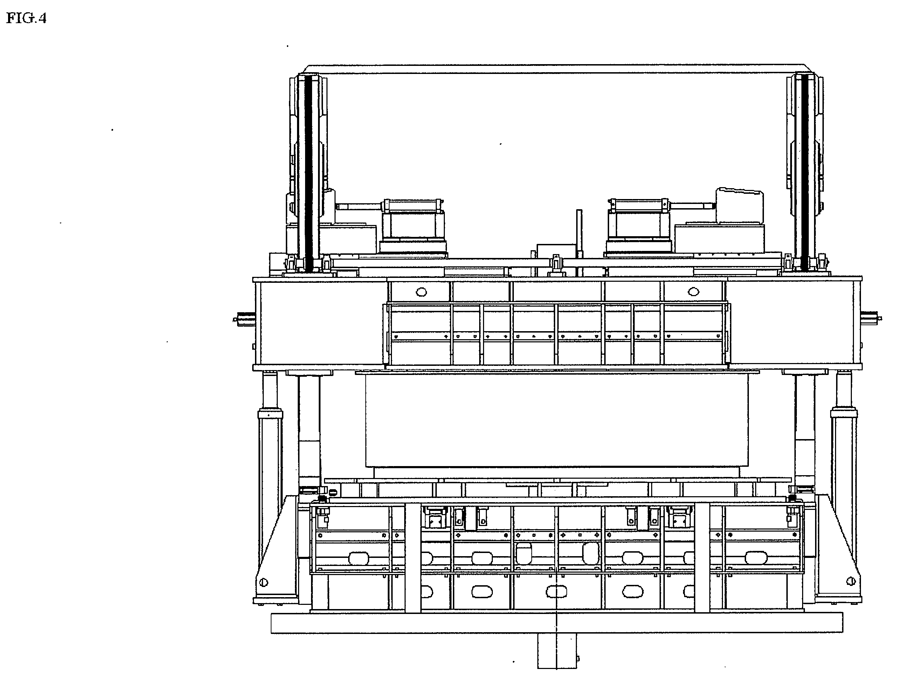

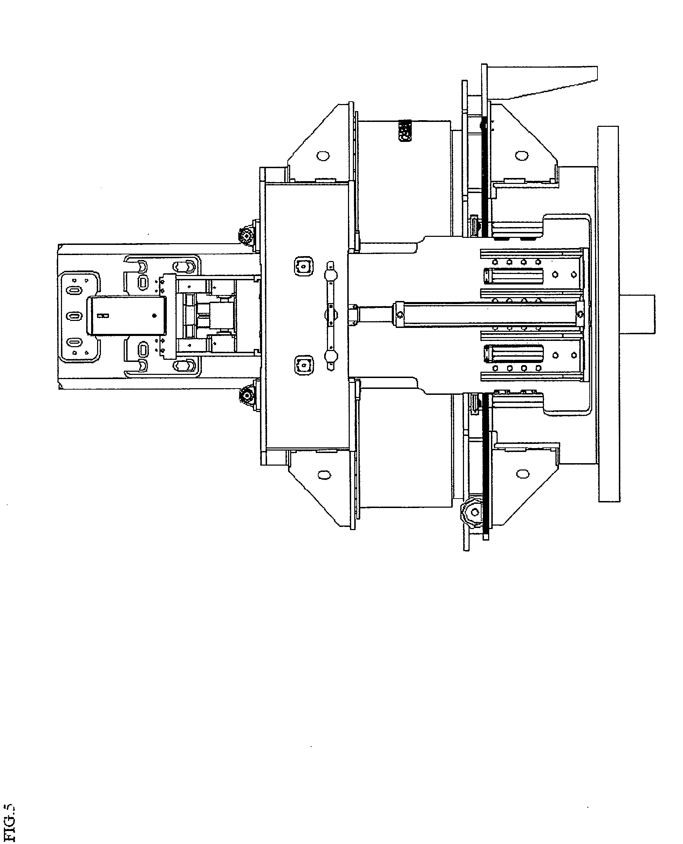

The main aspect for which this press differs from the technologies proposed by other manufacturers lies in the strongly innovative solution shown in Fig. 1, 4 and 5.

First and foremost, two ultra-high pressure (700 bar) hydraulic cylinders have been installed in the upper part of the connecting rods. Thanks to a steel block, which comes between the crosshead of the press and the connecting rod, these cylinders are able to exercise a closing force (and, consequently, a pressure at the press itself) of over 850 tons.

This solution is a true innovation for this specific sector as compared to other methods where the hydraulic cylinders are installed in the lower part of the connecting rod and do not make full use of the bore during the closing phase.

Another peculiarity of the MGT system is that the special device situated in the lower part of the die is completely different from the ones proposed by other manufacturers.

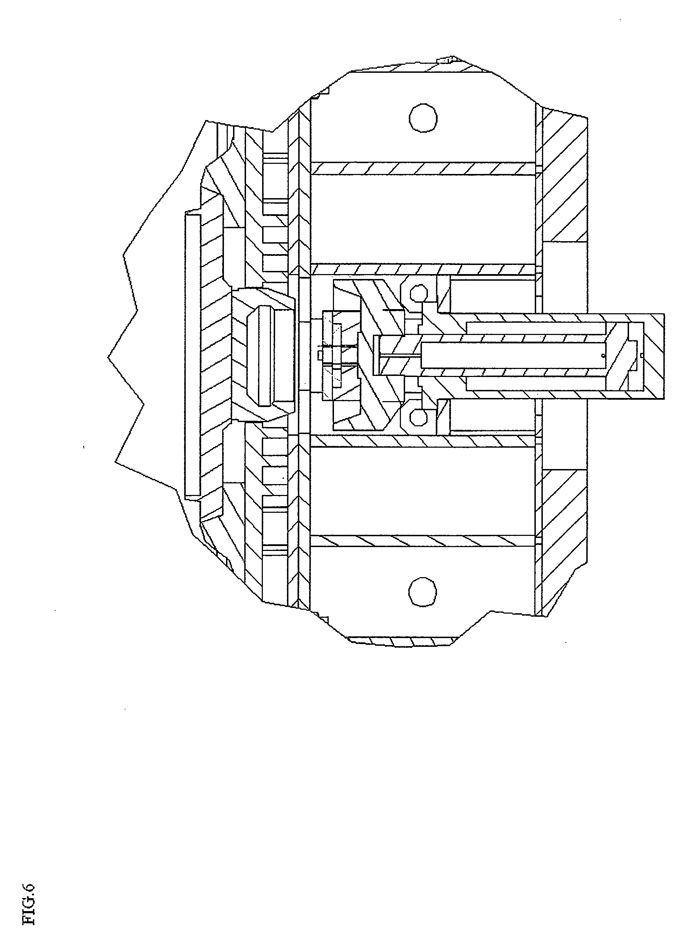

This feature (see Fig. 1 and 6) allows the lower hydraulic cylinder to be released from the die without having to move the cylinder itself. In the currently available technologies, this operation weakens the structure of the bearing surface owing to the effects of the shearing action to which it is subjected (see Fig. 3). More specifically, the support of the new device is neither structurally nor permanently enbloc with the hydraulic cylinder that drives it, but the link between the two components is driven by a hydraulic system that can be controlled in a fully automatic way. MGT installs a device known as a "pick-up plate" on the head of the cylinder rod in this new press. Thanks to this device, the lower part of the die can be released from the cylinder at the appropriate time.

This solution has allowed MGT Sr1 to create a structurally homogeneous machine, thus one that is much more able to withstand the enormous thrust force generated by the tyre as it is vulcanized.

## Claims

1. **Characteristics and special features of the connecting rod-cylinders solution.**
As compared to the conventional machines, the peculiar feature of this press is that two ultra-high pressure (700 bar) hydraulic cylinders are installed in the upper part of the two connecting rods. Thanks to a steel block, which comes between the crosshead of the press and the connecting rod, these cylinders are able to exercise a closing force of over 850 tons at the press itself. (see Fig. 1, 4 and 5).

2. **Tyre extraction device.**
Another peculiarity of the MGT system is that the special device situated in the lower part of the die is completely different from the ones proposed by other manufacturers. This feature (see description and Fig. 1 and 6) allows the lower hydraulic cylinder to be released from the die without having to move the cylinder itself.
